# EUROPEAN PATENT SPECIFICATION

(11) **EP 2 429 283 B1**
(45) Date of publication and mention of the grant of the patent: **02.10.2013**
(21) Application number: 09801528.2
(22) Date of filing: 17.12.2009
(51) Int. Cl.: B63G 13/00, F41B 9/00, A01M 29/30

(54) **MARITIME VESSEL BOARDING DETERRENT**
ZUTRITTS ABWEHR VORRICHTUNG FÜR SCHIFFE
DISPOSITIF DE DISSUASION D'ABORDAGE DE NAVIRE MARITIME

(30) Priority: 14.05.2009 GB 0908306
(43) Date of publication of application: 21.03.2012
(73) Proprietor: Dasic Marine Limited, Eastleigh, Hampshire SO53 4NF (GB)
(72) Inventor: OWENS, Robert, Eastleigh Hampshire SO53 4NF (GB)
(74) Representative: Berryman, Robert Jan
(86) International application number: PCT/GB2009/002913
(87) International publication number: WO 2010/130966

(56) References cited:
- EP-A- 0 818 664
- WO-A-2006/131031
- DE-A1-102004 017 880
- US-A- 4 895 307
- US-A- 4 996 521

## Description

### Field of the Invention

The present invention relates to a maritime vessel boarding deterrent. More particularly, the present invention relates to the use of a water jet deterrent device.

### Background of the Invention

In 2008/2009, there has been an unprecedented rise in piracy attacks on commercial shipping over a vast area of international waters. This has been brought about mainly due to abject poverty within lawless states. For 2008/2009, the International Maritime Bureau recorded 293 ships being attacked, 49 ships with 889 crewmembers being held hostage, 11 crew members killed and 21 reported missing presumed dead. This culminated in reported ransom fees paid by ship owners in excess of $40 million.

Most successful piracy attack tactics are executed in under 15 minutes. Unless a military vessel is directly within the vicinity of an attack their role becomes one of observing and reporting since it typically takes 10 to 15 minutes to respond and activate a helicopter on standby from their deck. There is no United Nations mandate to take ships back once they have been taken by pirates. Once aboard, pirates need only overcome the crew who are usually unarmed, and are in any case usually under instructions not to resist in the interests of their personal safety. Once the pirates have boarded the ship and subdued the crew, the ship is rerouted under armed hostage to Somalian waters (for example) whereupon a series of expensive and lengthy negotiations for the release of the ship and its crew begins.

Various measures may be applied to "harden" a ship against piracy attacks. These may include the provision of barbed or razor wire around the periphery of the ship, and the fixation of the fire safety water hoses to handrails or gunnels around the ship. Water hoses provided in this way are not manned, because this would make the individual manning the water hose a target for the pirates. The water hoses provide a fixed low pressure arc, and present little in the way of forceful deterrent against a small fast craft carrying determined pirates. In particular, these fire hoses generate a mist type water jet which is very little deterrent to incoming pirates. A report issued by OCIMF (Oil Companies International Marine Forum): "Piracy - The East Africa/Somalia Situation" contains recommendations relating to handling pirate attacks, and one of the recommendations is the use of an unmanned fire water hose as a limited deterrent.

DE 10 2004 017 880 Al describes a deterrent system for animals and people which sprays conductive liquid with electrical charge when activated by a presence detector unit.

### Summary of Invention

According to a first aspect of the present invention there is provided a water jet deterrent device for mounting to a maritime vessel. The water jet deterrent device comprises:
a fluid distribution chamber, having a fluid inlet for receiving water under pressure from a vessel-borne water supply system, and a fluid outlet;
a nozzle head comprising a plurality of water jet nozzles, the nozzle head being rotatably mounted with respect to the fluid distribution chamber and arranged to receive the water under pressure via the fluid outlet and output the water via the water jet nozzles as water jets, the plurality of water jet nozzles being distributed about the axis of rotation of the nozzle head; and
a drive mechanism for driving the rotation of the nozzle head with respect to the fluid distribution chamber; wherein
the fluid outlet is arranged to distribute the water under pressure to each of the water jet nozzles during only a portion of each rotation of the nozzle head around its axis of rotation.

Unlike a fixed hose producing a fixed arc of water, the provision of a rotating nozzle head provides a time-varying distribution of water jets which are much more difficult for pirates to predict and manoeuvre around. In this way, an effective non-lethal deterrent can be provided. Rotating nozzle heads are known in the field of tank cleaning machines in which they are arranged to spray water jets in all directions to clean all interior surfaces of the tank that the unit is installed in. A rotating nozzle head of this type would be unsuitable for use as an effective deterrent, because it would project water in all directions (over a period of time), which would cause some of the water to be projected in directions which are not beneficial to providing a deterrent effect against pirates, Moreover, the water supply system of a maritime vessel is limited in terms of the amount of water pressure it can generate, and the formation of non-beneficial water jets may serve to reduce the amount of pressure available for forming the beneficial jets of water at a sufficiently high pressure to act as a deterrent. In order to overcome these problems, the present technique feeds the water jet nozzles with water under pressure during only a portion of each rotation of the nozzle head. The portion of each rotation may be a continuous portion, or a discontinuous portions. In either case, the portion of each rotation of the nozzle head during which a nozzle is provided with the water under pressure is less than a full rotation. This may be achieved by feeding the water jet nozzles with water under pressure only while they are passing along one or more predetermined arcs around the axis of rotation of the nozzle head. The technique of feeding the water jet nozzles with water under pressure during only a portion of each rotation of the nozzle head serves to increase the water pressure of each jet which is being fed with water under pressure and making better use of available water pressure.

When the device is mounted to the vessel, the predetermined arc will typically be aligned so that it causes water jets to be provided only in a generally downwards, horizontal and/or outwards direction, so that the majority of the impacting water strikes the areas from which the pirates are attacking. There would usually be no benefit in projecting water jets upwards above the horizon line. When water is only fed from the fluid distribution chamber to nozzles as they pass along a substantially unbroken predetermined arc, the fluid outlet may be arranged to distribute the water under pressure to up to X adjacent water jet nozzles concurrently, wherein X < N, N being the number of water jet nozzles provided on the nozzle head. In other words, at any given time only a subset (rather than all) of the nozzles will receive water from the fluid distribution chamber.

The fluid distribution chamber may comprise a substantially cylindrical portion around which the nozzle head is arranged to rotate. In this case, the fluid outlet will be provided as an aperture in the cylindrical portion of the distribution chamber, and each of the plurality of water jet nozzles will receive the water under pressure from the fluid distribution chamber as it passes across the aperture during rotation of the nozzle head. This arrangement provides a mechanically strong structure whereby the nozzle head surrounds the distribution chamber and water pressure is applied radially from the distribution chamber into the nozzles.

The angular circumferential extent of the aperture in the cylindrical portion of the distribution chamber would typically be between approximately 90° and approximately 180°. Where an angle of 180° is used, each device is able to provide a rotating array of high impact multiple jets covering a 180° arc away from the vessel. The actual value chosen will depend on the extent of coverage required of the device, and the water pressure capability of the water supply system of the vessel. It will be appreciated that the greater the circumferential extent of the aperture, the greater the overall water pressure required by the device in order to provide high pressure jets of water from the device.

Each of the plurality of water jet nozzles may be directed at a predetermined angle away from the plane within which the nozzle head rotates. This enables the device itself to be mounted in a substantially horizontal orientation with respect to the vessel, and for the predetermined angle of the nozzles with respect to the plane within which the nozzle rotates causing the jets of water to be projected away from the vessel. The predetermined angle itself may be selected in dependence on the size and class of the maritime vessel, and on the position and/or orientation at which the device is to be provided on the vessel.

The drive mechanism may be powered in several ways. Preferably" the drive mechanism is powered by the water under pressure from the vessel-borne water supply system to reduce complexity. Alternatively, the drive mechanism might be powered for example by an electric motor or a hydraulic arrangement It will be understood that combining a water based device with an electrically driven device would lead to a number of engineering difficulties. In the case that a water powered drive mechanism is provided, such a water powered drive mechanism may comprise:
a drive shaft to which the nozzle head is fixed, and around the axis of which the nozzle head is caused to rotate by the rotation of the drive shaft;
a water driven turbine, for example a pelton wheel;
a fluid directing element for directing the water under pressure onto the turbine to cause rotation of the turbine about its axis of rotation; and
a drive assembly for driving the rotation of the drive shaft from the rotation of the turbine.

In one embodiment, the axis of rotation of the turbine is non-parallel with the axis of rotation of the drive shaft, and the drive assembly is a non-linear drive assembly comprising an angle drive arrangement for redirecting the rotational forces from about the axis of rotation of the turbine to about the axis of rotation of the drive shaft. The drive assembly may comprise a speed reducing gearbox to bring the speed of rotation down to a suitable rate for nozzle rotation and to increase torque for driving the drive shaft.

This embodiment may further comprise a fluid connector for connecting the water jet deterrent device to the water supply system and an inlet chamber for receiving the water under pressure from the water supply system via the fluid connector and for providing the water under pressure to the fluid distribution chamber and the fluid directing element of the drive mechanism. In order for the drive assembly to carry power from the turbine to the drive shaft (which would typically be provided axially within the distribution chamber), the drive assembly is arranged to intercept the inlet chamber.

In another embodiment, the axis of rotation of the turbine is substantially parallel to the axis of rotation of the drive shaft and the turbine is positioned to intercept the axis of rotation of the drive shaft. In this case, the drive assembly is a linear drive assembly, and may comprise a speed reducing gearbox.

This embodiment may further comprise a fluid connector for connecting the water jet deterrent device to the water supply system and an inlet chamber for receiving the water under pressure from the water supply system via the fluid connector and for providing the water under pressure to the fluid distribution chamber and the fluid directing element of the drive mechanism. One or more fluid transport channels for carrying the water under pressure from the inlet chamber around the turbine and into the fluid distribution chamber may also be provided.

In either of the above-mentioned embodiments, the fluid directing element may comprise a fluid transport channel for carrying the water under pressure from the inlet chamber to the turbine.

In order to provide a high velocity jet, the plurality of water jet nozzles may each comprise a flow straightener (for producing laminar flow), and a tapered bore for forming the water under pressure into a narrow substantially coherent stream of water.

In one example, 5 nozzles may be provided, and the number of adjacent water jet nozzles simultaneously provided with water under pressure may vary between two and three during the rotation of the nozzle head. The 5 nozzle design has been found to provide a suitable jetting capability in the area required. In particular, when between two and three nozzles are being used concurrently, a relatively dense pattern can be provided within the coverage area of the device, while sustaining the water pressure at a suitable level.

In order to provide an all-round deterrent, a water jet deterrent system mounted on a maritime vessel is envisaged which includes a plurality of the water jet deterrent devices each being operable to project a plurality of moving water jets within a pattern having a predetermined maximum extent. The maximum extent of each device will depend on the angle of the nozzles with respect to the nozzle head. The water jet deterrent devices are in this case mounted on the maritime vessel at a position and orientation which provides for the maximum extent of the jet patterns of adjacent water jet devices to overlap to form a substantially continuous deterrent perimeter around at least a portion of the maritime vessel. Accordingly, by providing a plurality of water jet deterrent devices, it is possible to provide a high impact curtain of water jets around the vessel.

It is generally not appropriate for the water jet deterrent devices to be manually controlled, and so a control unit may be provided at a safe location on the vessel which is responsive to user actuation to independently control the activation and deactivation of the water jet devices either individually or in groups. The control unit may be a pneumatic control unit, in which case a plurality of air actuated valves and a plurality of air feed lines will be provided. The air actuated valves are responsive to the application of compressed air through the air feed lines to activate a respective individual or group of water jet deterrent devices, and the plurality of air feed lines apply compressed air from the pneumatic control unit to the air actuated valves in response to a user actuation at the control unit.

It will be appreciated that the systems and device described herein can be applied to an existing vessel. As such, according to a further aspect of the invention, there is provided a method of providing a maritime vessel with a water jet deterrent comprising a step of mounting a plurality of water jet devices to the maritime vessel, each of the water jet devices being operable to project a plurality of moving water jets within a pattern having a predetermined maximum extent; wherein

the water jet deterrent devices are mounted on the maritime vessel at a position and orientation which provides for the maximum extent of the jet patterns of adjacent water jet devices to overlap to form a substantially continuous deterrent perimeter around at least a portion of the maritime vessel.

The techniques described herein can be optimised or adapted for any type of sea going vessel, craft or structure, from VLCCs (Very Large Crude Carrier) to super yachts, from static platforms to supply vessels. The system is particularly suitable for vessels with limited manoeuvrability or low freeboards, where pirates can otherwise readily intercept and board the vessel.

Various further aspects and features of the invention are defined in the appended claims.

### Brief Description of the Drawings

Embodiments of the present invention will now be described by way of example only with reference to the accompanying drawings where like parts are provided with corresponding reference numerals and in which:
Figures 1A and 1B schematically illustrate an end view and a top view respectively of a water jet deterrent device according to a first embodiment;
Figure 2 schematically illustrates a cut-away side view of the water jet deterrent device of the first embodiment;
Figures 3A and 3B schematically illustrate a side view and cut-away of a water jet deterrent device common to the first embodiment and a second embodiment;
Figure 4 schematically illustrates a cut-away side view of the water jet deterrent device of the second embodiment;
Figure 5 schematically illustrates an example configuration of plural water deterrent devices as part of a water deterrent system on a maritime vessel;
Figure 6A and 6B schematically illustrate per-group control of the water deterrent system shown in Figure 5; and
Figure 7 schematically illustrates a pneumatic control arrangement.

### Description of Example Embodiments

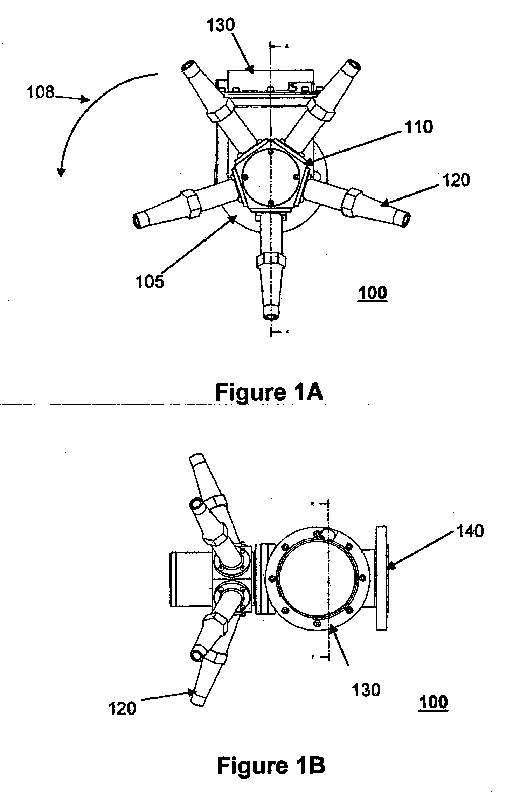

Referring to Figure 1A, an end view of a water jet deterrent device 100 according to a first embodiment is schematically illustrated. As can be seen from Figure 1A, the water jet deterrent device 100 comprises a main body 105 which can be physically mounted to a maritime vessel using an appropriate fixing method. For example, the water jet deterrent device 100 could be provided with a mounting arm for fixing to a railing, or a mounting stand for bolting to a deck. Alternatively the water jet deterrent device (or a suitable mounting for the device) could be integrated with the hull when the vessel is constructed. The device 100 comprises a nozzle head 110 which rotates with respect to the main body 105, and which comprises a plurality of nozzles 120 (in the present example 5 nozzles) for projecting jets of water away from the axis of rotation of the nozzle head 110. In the present example the nozzles 120 are manufactured separately from the nozzle head 110 and are bolted or riveted to the nozzle head 110. This is advantageous in that it enables a single type of nozzle head to carry any of several possible nozzle configurations (for example being shaped to project from the nozzle head at different angles with respect to the axis of rotation). However, it will be appreciated that the nozzles 120 could alternatively be integrally formed with the nozzle head 110. In either case, openings are provided in the nozzle head 110 directly underneath the base of each nozzle 120 to enable water to pass from inside the nozzle head 110 out through the nozzles 120.

The rotation of the nozzle head 110 with respect to the casing 105 is driven by a drive mechanism. In the present embodiment, a water driven turbine is used to drive the rotation of the nozzle head 110. More particularly, the present embodiment utilizes a pelton wheel arrangement, which is housed in a drive housing 130. The use of a water turbine such as a pelton wheel advantageously means that both the water jet generation and nozzle head rotation can be driven by the same source, that of the water pressure received by the device. However, it will be appreciated that it would be possible to drive the nozzle head rotation using an electric motor or hydraulic arrangement for example. The curved arrow 108 indicates the direction of rotation of the nozzle head 110, which in this case is anticlockwise. As can be seen from Figure 1B, the device 100 comprises a water inlet connection (flange) 140 which can be connected directly to the water supply system (and more particularly to the fire water main) of a vessel. It can be seen that the nozzles 120 project outwardly from the axis of rotation and away from the device. When the device is mounted to a vessel this will cause the rotating water jets to project outwardly from the vessel and towards approaching pirates.

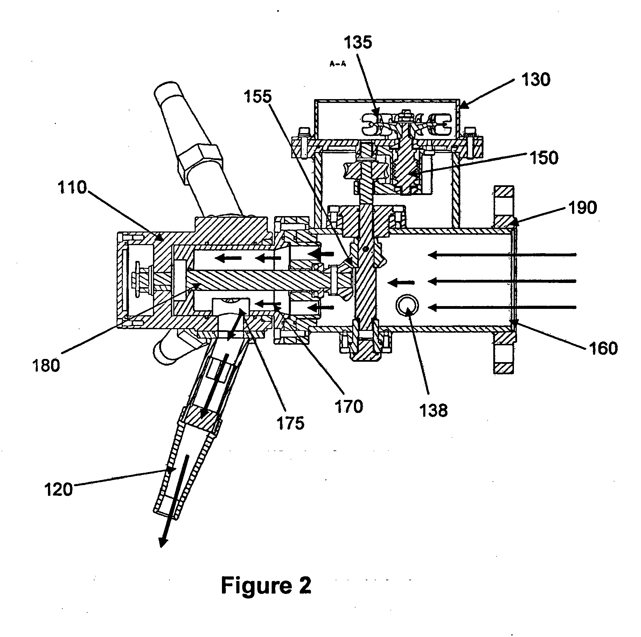

Referring to Figure 2, a cut-away schematic of the water jet deterrent device 100 is illustrated, in which the flow of water under pressure through the device is shown by directional arrows. The cut-away of Figure 2 is taken along the line A-A shown in Figure 1A. From Figure 2, it can be seen that the main body 105 of the device 100 comprises an inlet chamber 160 for receiving water under pressure from the ship-borne water supply via the inlet connection 140. The majority of the water received in the inlet chamber 160 passes through the device into a fluid distribution chamber 170 within the nozzle head 110. The fluid distribution chamber 170 has an outer surface of cylindrical form so that the nozzle head 110, which has an interior surface of cylindrical form, is able to fit closely around the fluid distribution chamber 170, and to rotate around the fluid distribution chamber 170. The fluid distribution chamber 170 has an aperture (slot) 175 cut around a portion of its circumference, through which water is forced into the nozzles 120 via the respective outlets in the nozzle head 110.

The remainder of the water which is forced into the inlet chamber 160 is diverted via a pipe 138 (which could equally be a hose or other form of fluid carrying channel) into the drive housing 130 to be projected at pressure at a pelton wheel 135. The stream of water projected at the pelton wheel 135 causes the pelton wheel 135 to rotate around its axis within the housing 130. The pelton wheel is connected to a drive train 150 which carries the rotational force generated by the pelton wheel through a speed reducing gearbox which reduces the rotational speed generated by the pelton wheel to suit a desired rotation speed of the nozzle head 110 and increases the torque for driving the rotation of the nozzle head 110. The drive train 150 also carries the rotational force through a 90° bevel gear arrangement 155 which redirects the rotational force generated by the pelton wheel 135 from perpendicular to the axis of rotation of the nozzle head 110 to parallel to (and coincident with) the axis of rotation of the nozzle head 110 to cause rotation of a drive shaft 180 which is mechanically coupled to the nozzle head 110.

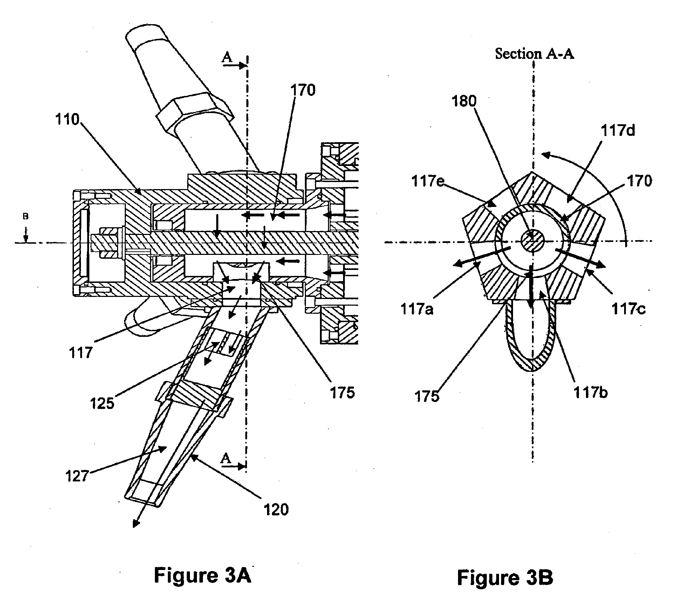

Figure 3A provides a close up view of the nozzle head 110 and fluid distribution chamber 170. As with Figure 2, the direction of flow of water under pressure through the device is illustrated by way of the directional arrows. In particular, the directional arrows indicate that water under pressure enters the fluid distribution chamber 170 from the main body of the apparatus, and then passes through the aperture 175 in the fluid distribution chamber through an outlet 117 in the nozzle head 110, and into the nozzle 120. The nozzle 120 is provided with flow straighteners 125 for changing the flow of water from turbulent to laminar, thereby increasing coherence of the water jets projected from the nozzle 120. The nozzle 120 is also provided with a tapered bore 127 for concentrating the water into a focused narrow jet of water, thereby increasing the effective pressure caused by the jet on impact with a target.

Figure 3B provides a sectional view of the nozzle head 110, fluid distribution chamber 170 and drive shaft 180 along the line A-A of Figure 3A. The nozzle head 110 can be seen to have a pentagonal external profile of five sides, each side being intended to carry one of the nozzles 120. The internal profile of the nozzle head 110 is circular, to match the circular external profile of the fluid distribution chamber 170. The nozzle head 110 has outlets 117a, 117b, 117c, 117d, 117e in each side of the pentagonal profile, through which water can pass into the respective nozzles 120. The fluid distribution chamber 170 in this case can be seen to have an aperture (slot) 175 which runs 180° around the circular profile of the chamber. By cutting the slot in the fixed hub of the fluid distribution chamber for the full 180 degrees below the centre line, the outlets 117a, 117b and 117c below the centre line have an open flow of water. The two outlets 117d and 117e above the centre line are closed off to the flow of water and thus the nozzles above the centre line do not project jets of water. As the head rotates anticlockwise (as shown by the curved arrow in Figure 3B) with respect to the fluid distribution chamber 170, the flow of water to the outlet 117c (and into the respective nozzle) rising towards the centre line is blocked. However, as the outlet 117e rotates down past the centre line the water begins to flow through the outlet 117e (and into the respective nozzle) as it reaches the aperture 175. This process continues as long as the machine is operating. It will be appreciated that with this configuration either two or three nozzles can be fully on at any one time, depending on the stage reached in the cycle of rotation.

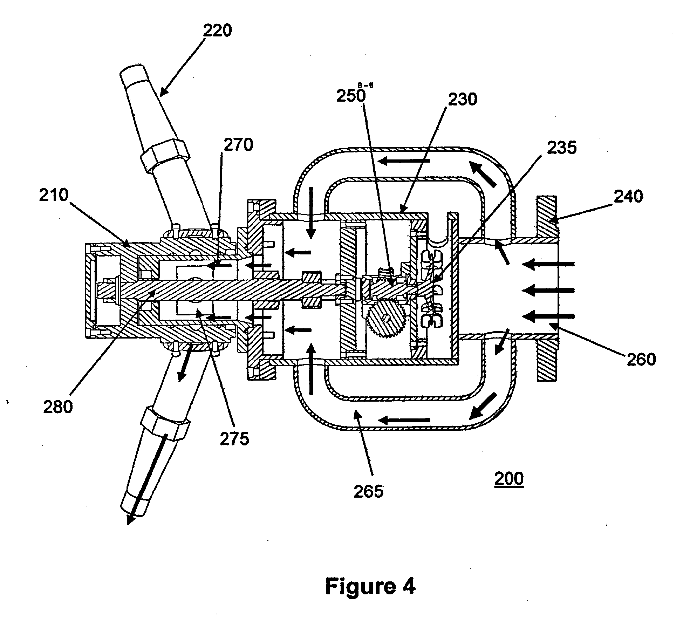

Referring to Figure 4, a second embodiment of the water jet deterrent device is schematically illustrated. The direction of water flow through the device shown in Figure 4 is indicated by the directional arrows. It should be noted that the structure and function of the nozzle head 110 and fluid distribution chamber 170 as shown in Figure 3 is common to both the first embodiment as described above, and the second embodiment. In Figure 4, a water jet deterrent device 200 is shown which uses a simpler drive mechanism, and which utilises several constructional changes (compared with the first embodiment) in order to make this drive mechanism possible. In particular, the water jet deterrent device 200 comprises pelton wheel 235 which has an axis of rotation parallel to (and in the present example coincident with) the axis of rotation of a nozzle head 210 upon which are mounted a plurality of nozzles 220. In this way, the complexity of the drive train is reduced because a linear drive train can be provided which does not require a 90° bevel gear arrangement,

As will be appreciated from Figure 4, the provision of the pelton wheel 235, along with a speed reducing gearbox of a drive train 250, on the axis of rotation of the nozzle head 210 results in these elements being provided at a location where in the first embodiment the inlet chamber 160 was provided. In order to accommodate this, an inlet chamber 260 of the second embodiment does not directly feed water under pressure received via a connector 240 to a fluid distribution chamber 270, but instead feed the water under pressure to the fluid distribution chamber 270 via transport channels 265 which run around the outset of a casing 230 which contains the pelton wheel 235 and the associated speed reducing gearbox. The pelton wheel is driven by a flow of water taken via a pipe or hose (not shown) from the inlet chamber 240 as with the first embodiment, and causes direction drive rotation of a drive shaft 280 via the speed reducing gearbox. The drive shaft is physically connected to the nozzle head 210 to provide rotation of the nozzle head 210. The water under pressure provided into the fluid distribution chamber is forced out into the nozzles 220 via an aperture 275 in the wall of the fluid distribution chamber 270 in the manner described in relation to the first embodiment.

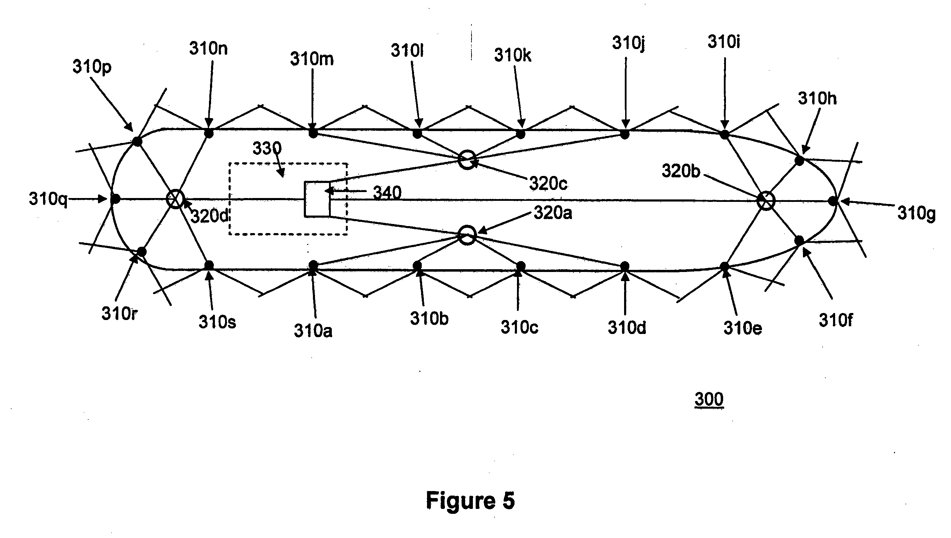

It will be appreciated that a single water jet deterrent device will not provide adequate deterrent when mounted on a large vessel. Accordingly, a plurality of such devices can be mounted around the perimeter of a vessel to provide unbroken protection. In Figure 5, an example of a water jet deterrent system 300 on a vessel is schematically illustrated. The water jet deterrent system 300 comprises 18 water jet deterrent devices 310a - 310s mounted around the perimeter of the vessel. The water jet coverage (maximum effective horizontal extent at sea level) of each of the devices is represented by the straight lines projecting from the devices 310a - 310s. It can be seen that the water jet coverage of each device overlaps with the water jet coverage of each adjacent device, leaving no gaps through which a manoeuvrable vessel could navigate. It will be appreciated that since each device generates a moving pattern of water jets, at any given instant coverage will not be continuous. However, when measured over a short period of time of order 1 second, the pattern will complete and coverage will be effectively continuous.

The devices are organised in groups, with one group allocated to protection of the port-side flank of the vessel, one group allocated to protection of the starboard side flank of the vessel, one group allocated to protection of the fore portion of the vessel and one group allocated to protection of the aft portion of the vessel. In particular, a starboard group 320a comprises four deterrent devices 310a, 310b, 310c and 310d, a fore group 320b comprises five deterrent devices 310e, 310f, 310g, 310h and 310i, a port group 320c comprises four deterrent devices 310j, 310k, 3101 and 310m, and an aft group 320d comprises five deterrent devices 310n, 310p, 310q, 310r and 310s.

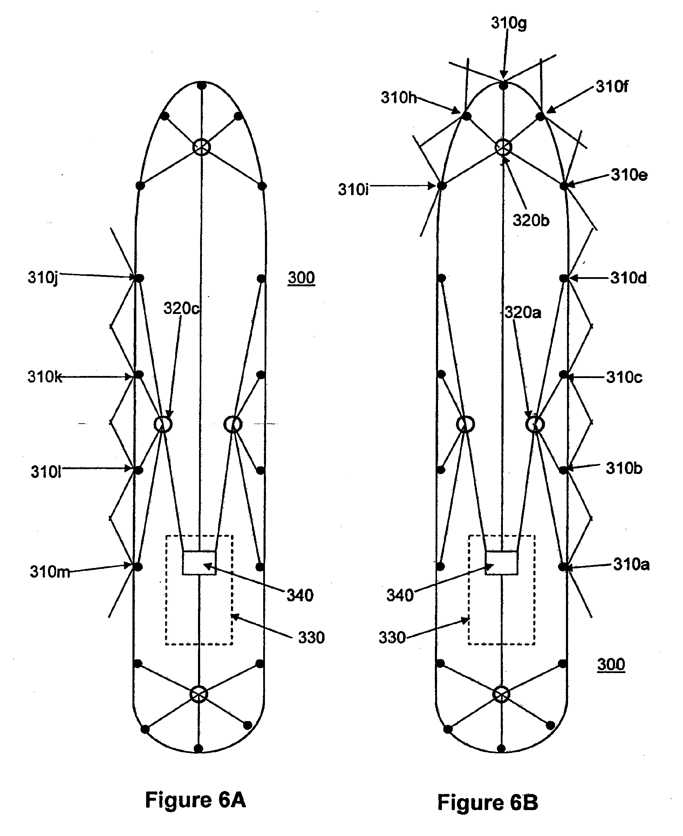

Each group can be controlled independently from the other groups from a control centre 340 provided at a safe central location, for example inside a superstructure 330. Surveillance cameras fitted to the vessel to provide an outward-looking view could be used by the operator of the deterrent system to determine were pirates are approaching from and therefore which groups of deterrent devices are to be activated. Figures 6A and 6B demonstrate group-based activation of the deterrent devices. In Figure 6A, the vessel and deterrent system shown in Figure 5 is illustrated in a state in which only the port group 320c of deterrent devices is active, as would be the case where pirates are determined to be approaching the port side of the vessel to deter the pirates from boarding at the port side. If the pirates should attempt to circle around from the port side around the bow to attack the vessel from the starboard side, the system can be switched into the state shown in Figure 6B, whereby the fore group 320b and the starboard group 320a are activated, in this case concurrently. While it would be simpler simply to keep all devices active at all times, in practice the water pressure provided by the water supply system would be inadequate to generate sufficiently high pressure jets of water from all devices concurrently.

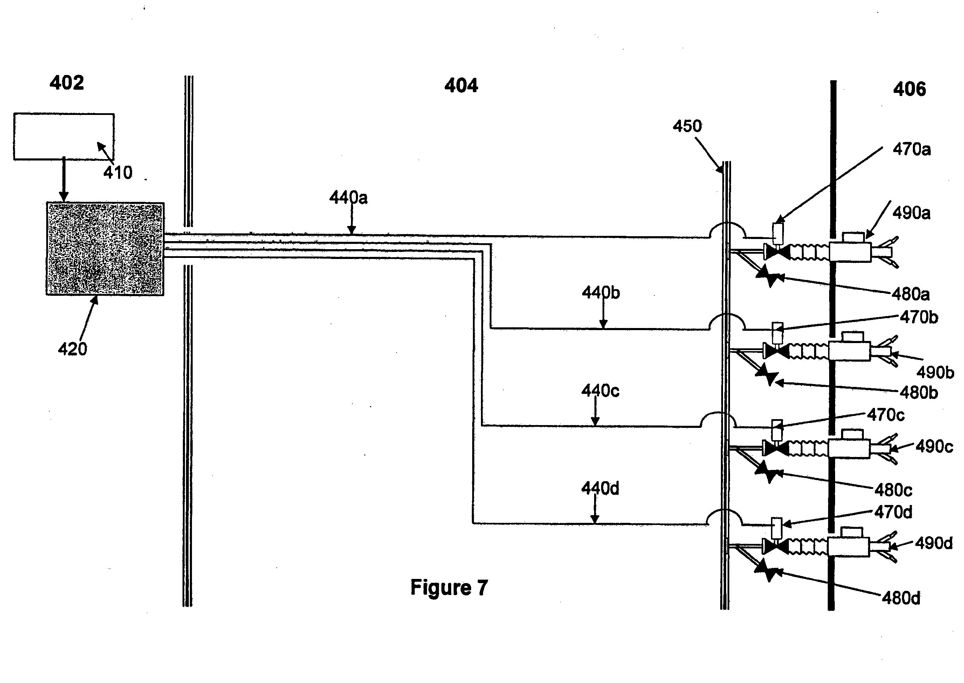

Referring to Figure 7, an example control schematic is described for the deterrent system described in Figures 5 and 6. The component parts illustrated in Figure 7 are distributed between a control room / safe operating area 402, a deck area 404 and overboard 406. In the overboard part 406 of Figure 7, only four deterrent devices 490a, 490b, 490c and 490d are shown for simplicity, each facing outwards from the vessel. Each of the deterrent devices 490a, 490b, 490c, 490d is connected to a vessel fire main 450 on the deck area 404 via a flexible hose and a respective Y connector 480a, 480b, 480c, 480d (also on the deck area) which preserves fire fighting access to the fire main while the deterrent devices are connected to the fire main. The deterrent devices 490a, 490b, 490c, 490d are each actuated by way of a respective pneumatic valve 470a, 470b, 470c, 470d. The pneumatic valves 470a, 470b, 470c, 470d are fed by respective air feed lines 440a, 440b, 440c, 440d which run across the deck area 404 and into the control room / safe operating area 402. In the control room / safe operating area, a push button pneumatic control panel 420 is provided which selectively routes compressed air from a vessel air supply into a selected one (or more) of the deterrent devices 490a, 490b, 490c, 490d.

As will be understood from Figure 7, each deterrent device may be positioned strategically over the side of the ship on (for example) a fixed support arm arrangement when a "hardening" process is being applied to the vessel. The system is coupled to the fire main through a series of Y-junctions and flexible hoses. In order to make the most effective use of the water pressure and flow available, a pneumatic valve arrangement is used which is controlled from a safe area to be determined aboard the ship. Each device can then be controlled to turn on as single units, in pairs, threes or any other grouping at the point of the threat to provide the most effective impact and use of available water pressure.

In the example described above, a five nozzle portable water jet device is mounted over the side of a ship and connected into the existing firewater system. Several such device are connected to the firewater system in parallel at intervals over preferably the entire length of the ship both port and starboard. Using the available water pressure from the firewater system and with appropriate nozzle design, each device can achieve jet lengths in excess of 22 metres with an equivalent impact at 5 metres of a 10kg mass travelling at 55 miles per hour. A single unit would provide limited coverage, but when a series of units are mounted around the ship with overlapping jet trajectories, a high pressure curtain can be generated which will make the ship very difficult to board.

It will be appreciated that the advantages of the present technique in relation to making best use of available water pressure make the device appropriate to other applications (rather than providing a deterrent effect to pirates) in which water jets may advantageously be concentrated into or onto a particular area to maximise the jet pressure and and/or minimise the loading on the water supply providing the water under pressure.

The main body, housing and internal components of the water jet deterrent device may be formed of any suitable material. For example, stainless steel may be utilised to provide a strong, rigid construction, or suitable salt-water resistant plastic materials may be utilised to provide a lighter, more portable unit.

## Claims

1. A water jet deterrent device (100, 200) for mounting to a maritime vessel, comprising:
a fluid distribution chamber (170, 270), having a fluid inlet for receiving water under pressure from a vessel-borne water supply system, and a fluid outlet (175, 275); and
a nozzle head (110, 210) comprising a plurality of water jet nozzles (120, 220), the nozzle head being rotatably mounted with respect to the fluid distribution chamber (170, 270) and arranged to receive the water under pressure via the fluid outlet (175, 275) and output the water via the water jet nozzles (120, 220) as water jets, the plurality of water jet nozzles (120, 220) being distributed about the axis of rotation of the nozzle head (110, 210); wherein
the fluid outlet (175, 275) is arranged to distribute the water under pressure to each of the water jet nozzles (120, 220) during only a portion of each rotation of the nozzle head (110, 210) around its axis of rotation.

2. A water jet deterrent device according to claim 1, wherein the nozzle head (110, 210) comprises N nozzles (120, 220), and the fluid outlet (175, 275) is arranged to distribute the water under pressure to up to X adjacent water jet nozzles concurrently, wherein X < N.

3. A water jet deterrent device according to claim 1 or claim 2, wherein the plurality of nozzles N = 5, and wherein the number X of adjacent water jet nozzles (120, 220) simultaneously provided with the water under pressure varies between 2 and 3 during the rotation of the nozzle head (110, 210).

4. A water jet deterrent device according to any preceding claim, wherein the fluid distribution chamber (170, 270) comprises a substantially cylindrical portion around which the nozzle head is arranged to rotate, the fluid outlet (175, 275) being provided as an aperture in the cylindrical portion of the distribution chamber, each of the plurality of water jet nozzles (120, 220) receiving the water under pressure from the fluid distribution chamber as it passes across the aperture (175, 275) during rotation of the nozzle head.

5. A water jet deterrent device according to claim 4, wherein the angular circumferential extent of the aperture (175, 275) in the cylindrical portion of the distribution chamber (170, 270) is between approximately 90° and approximately 180°.

6. A water jet deterrent device according to any preceding claim, wherein each of the plurality of water jet nozzles (120, 220) is directed at a predetermined angle away from the plane within which the nozzle head (110, 210) rotates, the predetermined angle being selected in dependence on the size of the maritime vessel.

7. A water jet deterrent device according to any preceding claim, comprising a drive mechanism for driving the rotation of the nozzle head (110, 210) with respect to the fluid distribution chamber (170, 270).

8. A water jet deterrent device according to claim 7, wherein the drive mechanism is powered by the water under pressure from the vessel-borne water supply system.

9. A water jet deterrent device according to claim 8, wherein the drive mechanism comprises:
a drive shaft (180, 280) to which the nozzle head (110, 210) is fixed, and around the axis of which the nozzle head is caused to rotate by the rotation of the drive shaft;
a water driven turbine (135,235);
a fluid directing element (138, 265) for directing the water under pressure onto the turbine to cause rotation of the turbine about its axis of rotation; and
a drive assembly (150, 250) for driving the rotation of the drive shaft from the rotation of the turbine.

10. A water jet deterrent device according to claim 9, wherein the axis of rotation of the turbine (135) is non-parallel with the axis of rotation of the drive shaft (180), and wherein the drive assembly is a non-linear drive assembly (150) comprising an angle drive arrangement for redirecting the rotational forces from about the axis of rotation of the turbine (135) to about the axis of rotation of the drive shaft (180).

11. A water jet deterrent device according to claim 10, comprising:
a fluid connector (140) for connecting the water jet deterrent device to the water supply system;
an inlet chamber (160) for receiving the water under pressure from the water supply system via the fluid connector (140) and for providing the water under pressure to the fluid distribution chamber and the fluid directing element of the drive mechanism; wherein
the drive assembly (150) intercepts the inlet chamber (160).

12. A water jet deterrent device according to claim 9, wherein the axis of rotation of the turbine (235) is substantially parallel to the axis of rotation of the drive shaft (280) and the turbine (235) is positioned to intercept the axis of rotation of the drive shaft (200), and wherein the drive assembly is a linear drive assembly (250).

13. A water jet deterrent device according to claim 12, comprising:
a fluid connector (240) for connecting the water jet deterrent device to the water supply system;
an inlet chamber (260) for receiving the water under pressure from the water supply system via the fluid connector (240) and for providing the water under pressure to the fluid distribution chamber (270) and the fluid directing element of the drive mechanism (250); and
one or more fluid transport channels (265) for carrying the water under pressure from the inlet chamber (260) around the turbine (235) and into the fluid distribution chamber (270).

14. A water jet deterrent system (300) mounted on a maritime vessel, comprising:
a plurality of water jet deterrent devices (310) according to any preceding claim, each being operable to project a plurality of moving water jets within a pattern having a predetermined maximum extent; wherein
the water jet deterrent devices (310) are mounted on the maritime vessel at a position and orientation which provides for the maximum extent of the jet patterns of adjacent water jet devices to overlap to form a substantially continuous deterrent perimeter around at least a portion of the maritime vessel.

15. A method of providing a maritime vessel with a water jet deterrent, comprising the step of mounting a plurality of water jet devices (310) according to any one of claims 1 to 13 to the maritime vessel, each of the water jet devices (310) being operable to project a plurality of moving water jets within a pattern having a predetermined maximum extent; wherein
the water jet deterrent devices (310) are mounted on the maritime vessel at a position and orientation which provides for the maximum extent of the jet patterns of adjacent water jet devices to overlap to form a substantially continuous deterrent perimeter around at least a portion of the maritime vessel.

## Patentansprüche

1. Wasserstrahl-Abschreckungsvorrichtung (100, 200) für die Montage an einem Seeschiff, die Folgendes umfasst:
eine Fluidverteilungskammer (170, 270), die einen Fluideinlass zum Aufnehmen von Wasser unter Druck von einem schiffseigenen Wasserversorgungssystem und einen Fluidauslass (175, 275) besitzt; und
einen Düsenkopf (110, 210), der mehrere Wasserstrahldüsen (120, 220) aufweist, wobei der Düsenkopf in Bezug auf die Fluidverteilungskammer (170, 270) drehbar montiert ist und dafür ausgelegt ist, Wasser unter Druck durch den Fluidauslass (175, 275) zu empfangen und das Wasser durch die Wasserstrahldüsen (120, 220) als Wasserstrahlen auszugeben, wobei die mehreren Wasserstrahldüsen (120, 220) um die Drehachse des Düsenkopfes (110, 210) verteilt sind; wobei
der Fluidauslass (175, 275) dafür ausgelegt ist, das Wasser unter Druck nur während eines Teils jeder Drehung des Düsenkopfes (110, 210) um seine Drehachse an jede der Wasserstrahldüsen (120, 220) zu verteilen.

2. Wasserstrahl-Abschreckungsvorrichtung nach Anspruch 1, wobei der Düsenkopf (110, 210) N Düsen (120, 220) umfasst und der Fluidauslass (175, 275) dafür ausgelegt ist, das Wasser unter Druck konkurrent an bis zu X benachbarte Wasserstrahldüsen zu verteilen, wobei X < N.

3. Wasserstrahl-Abschreckungsvorrichtung nach Anspruch 1 oder Anspruch 2, wobei die mehreren Düsen N = 5 und wobei die Anzahl X benachbarter Wasserstrahldüsen (120, 220), die gleichzeitig mit dem Wasser unter Druck beaufschlagt werden, während der Drehung des Düsenkopfes (110, 210) zwischen 2 und 3 schwankt.

4. Wasserstrahl-Abschreckungsvorrichtung nach einem vorhergehenden Anspruch, wobei die Fluidverteilungskammer (170, 270) einen im Wesentlichen zylindrischen Abschnitt umfasst, um den der Düsenkopf sich zu drehen ausgelegt ist, wobei der Fluidauslass (175, 275) als eine Öffnung in dem zylindrischen Abschnitt der Verteilungskammer vorgesehen ist, wobei jede der mehreren Wasserstrahldüsen (120, 220) das Wasser unter Druck von der Fluidverteilungskammer empfängt, wenn es sich während der Drehung des Düsenkopfes durch die Öffnung (175, 275) bewegt.

5. Wasserstrahl-Abschreckungsvorrichtung nach Anspruch 4, wobei die Umfangswinkelerstreckung der Öffnung (175, 275) in dem zylindrischen Abschnitt der Verteilungskammer (170, 270) im Bereich von etwa 90° bis etwa 180° liegt.

6. Wasserstrahl-Abschreckungsvorrichtung nach einem vorhergehenden Anspruch, wobei jede der mehreren Wasserstrahldüsen (120, 220) unter einem vorgegebenen Winkel weg von der Ebene gerichtet ist, in der sich der Düsenkopf (110, 210) dreht, wobei der vorgegebene Winkel in Abhängigkeit von der Größe des Seeschiffes gewählt wird.

7. Wasserstrahl-Abschreckungsvorrichtung nach einem vorhergehenden Anspruch, die einen Antriebsmechanismus umfasst, um die Drehung des Düsenkopfes (110, 210) in Bezug auf die Fluidverteilungskammer (170, 270) anzutreiben.

8. Wasserstrahl-Abschreckungsvorrichtung nach Anspruch 7, wobei der Antriebsmechanismus durch das Wasser unter Druck von dem schiffseigenen Wasserversorgungssystem mit Leistung versorgt wird.

9. Wasserstrahl-Abschreckungsvorrichtung nach Anspruch 8, wobei der Antriebsmechanismus Folgendes umfasst:
eine Antriebswelle (180, 280), an der der Düsenkopf (110, 210) befestigt ist und um deren Achse der Düsenkopf durch die Drehung der Antriebswelle zu einer Drehung veranlasst wird;
eine wassergetriebene Turbine (135, 235);
ein Fluidlenkungselement (138, 265), um das Wasser unter Druck auf die Turbine zu lenken, um die Drehung der Turbine um ihre Drehachse zu veranlassen; und
eine Antriebsanordnung (150, 250), um die Drehung der Antriebswelle anhand der Drehung der Turbine anzutreiben.

10. Wasserstrahl-Abschreckungsvorrichtung nach Anspruch 9, wobei die Drehachse der Turbine (135) zu der Drehachse der Antriebswelle (180) nicht parallel ist und wobei die Antriebsanordnung eine nichtlineare Antriebsanordnung (150) ist, die eine Winkelantriebsanordung umfasst, um die Drehkräfte von einer Richtung um die Drehachse der Turbine (135) zu einer Richtung um die Drehachse der Antriebswelle (180) umzulenken.

11. Wasserstrahl-Abschreckungsvorrichtung nach Anspruch 10, die Folgendes umfasst:
einen Fluidverbinder (140), um die Wasserstrahl-Abschreckungsvorrichtung mit dem Wasserversorgungssystem zu verbinden;
eine Einlasskammer (160), um das Wasser unter Druck von dem Wasserversorgungssystem durch den Fluidverbinder (140) zu empfangen und um das Wasser unter Druck für die Fluidverteilungskammer und das Fluidlenkungselement des Antriebsmechanismus bereitzustellen; wobei
die Antriebsanordnung (150) die Einlasskammer (160) schneidet.

12. Wasserstrahl-Abschreckungsvorrichtung nach Anspruch 9, wobei die Drehachse der Turbine (235) zu der Drehachse der Antriebswelle (280) im Wesentlichen parallel ist und die Turbine (235) so positioniert ist, dass sie die Drehachse der Antriebswelle (200) schneidet, und wobei die Antriebsanordnung eine geradlinige Antriebsanordnung (250) ist.

13. Wasserstrahl-Abschreckungsvorrichtung nach Anspruch 12, die Folgendes umfasst:
einen Fluidverbinder (240), um die Wasserstrahl-Abschreckungsvorrichtung mit dem Wasserversorgungssystem zu verbinden;
eine Einlasskammer (260), um das Wasser unter Druck von dem Wasserversorgungssystem durch den Fluidverbinder (240) zu empfangen und um das Wasser unter Druck für die Fluidverteilungskammer (270) und das Fluidlenkungselement des Antriebsmechanismus (250) bereitzustellen; und
einen oder mehrere Fluidtransportkanäle (265), um das Wasser unter Druck von der Einlasskammer (260) um die Turbine (235) und in die Fluidverteilungskammer (270) zu führen.

14. Wasserstrahl-Abschrecksystem (300), das auf einem Seeschiff montiert ist und Folgendes umfasst:
mehrere Wasserstrahl-Abschreckungsvorrichtungen (310) nach einem vorhergehenden Anspruch, die jeweils betreibbar sind, um mehrere sich bewegende Wasserstrahlen innerhalb eines Musters, das eine vorgegebene maximale Ausdehnung hat, auszustoßen; wobei
die Wasserstrahl-Abschreckungsvorrichtungen (310) auf dem Seeschiff an einer Position und mit einer Orientierung montiert sind, die die maximale Ausdehnung der Strahlmuster benachbarter Wasserstrahlvorrichtungen ergeben, damit sie überlappen, um einen im Wesentlichen ununterbrochenen Abschreckungsumfang wenigstens um einen Teil des Seeschiffes zu bilden.

15. Verfahren zum Versehen eines Seeschiffes mit einer Wasserstrahlabschreckung, das den Schritt des Montierens mehrerer Wasserstrahlvorrichtungen (310) nach einem der Ansprüche 1 bis 13 an dem Seeschiff umfasst, wobei jede der Wasserstrahlvorrichtungen (310) betreibbar ist, um mehrere sich bewegende Wasserstrahlen in einem Muster mit einer vorgegebenen maximalen Ausdehnung auszustoßen; wobei
die Wasserstrahl-Abschreckungsvorrichtungen (310) auf dem Seeschiff an einer Position und mit einer Orientierung montiert sind, die die maximale Ausdehnung der Strahlmuster benachbarter Wasserstrahlvorrichtungen ergeben, damit sie überlappen, um einen im Wesentlichen ununterbrochenen Abschreckungsumfang wenigstens um einen Teil des Seeschiffes zu bilden.

## Revendications

1. Dispositif de dissuasion à jets d'eau (100, 200) destiné à être monté sur un navire maritime, comprenant :
une chambre de distribution de fluide (170, 270) ayant une entrée de fluide pour recevoir de l'eau sous pression provenant d'un système d'alimentation en eau installé à bord du navire et une sortie de fluide (175, 275) ; et
une tête à buses (110, 210) comprenant une pluralité de buses à jet d'eau (120, 220), la tête à buses étant montée à rotation par rapport à la chambre de distribution de fluide (170, 270) et
conçue pour recevoir l'eau sous pression par le biais de la sortie de fluide (175, 275) et faire sortir l'eau par le biais des buses à jet d'eau (120, 220) sous forme de jets d'eau, la pluralité de buses à jet d'eau (120, 220) étant distribuée autour de l'axe de rotation de la tête à buses (110, 210) ; dans lequel
la sortie de fluide (175, 275) est conçue pour distribuer l'eau sous pression à chacune des buses à jet d'eau (120, 220) pendant seulement une partie de chaque rotation de la tête à buses (110, 210) autour de son axe de rotation.

2. Dispositif de dissuasion à jets d'eau selon la revendication 1, dans lequel la tête à buses (110, 210) comprend N buses (120, 220), et la sortie de fluide (175, 275) est conçue pour distribuer l'eau sous pression à jusqu'à X buses à jet d'eau adjacentes simultanément, avec X < N.

3. Dispositif de dissuasion à jets d'eau selon la revendication 1 ou 2, dans lequel la pluralité de buses N = 5, et dans lequel le nombre X de buses à jet d'eau adjacentes (120, 220) alimentées simultanément en eau sous pression varie entre 2 et 3 pendant la rotation de la tête à buses (110, 210).

4. Dispositif de dissuasion à jets d'eau selon l'une quelconque des revendications précédentes, dans lequel la chambre de distribution de fluide (170, 270) comprend une partie sensiblement cylindrique autour de laquelle la tête à buses est conçue pour tourner, la sortie de fluide (175, 275) étant prévue sous forme d'ouverture dans la partie cylindrique de la chambre de distribution, chacune parmi la pluralité de buses à jet d'eau (120, 220) recevant l'eau sous pression provenant de la chambre de distribution de fluide lorsqu'elle traverse l'ouverture (175, 275) pendant la rotation de la tête à buses.

5. Dispositif de dissuasion à jets d'eau selon la revendication 4, dans lequel l'étendue circonférentielle angulaire de l'ouverture (175, 275) dans la partie cylindrique de la chambre de distribution (170, 270) se situe entre approximativement 90° et approximativement 180°.

6. Dispositif de dissuasion à jets d'eau selon l'une quelconque des revendications précédentes, dans lequel chacune parmi la pluralité de buses à jet d'eau (120, 220) est dirigée suivant un angle prédéfini à l'écart du plan dans lequel tourne la tête à buses (110, 210), l'angle prédéfini étant sélectionné en fonction de la taille du navire maritime.

7. Dispositif de dissuasion à jets d'eau selon l'une quelconque des revendications précédentes, comprenant un mécanisme d'entraînement pour entraîner en rotation la tête à buses (110, 210) par rapport à la chambre de distribution de fluide (170, 270).

8. Dispositif de dissuasion à jets d'eau selon la revendication 7, dans lequel le mécanisme d'entraînement est actionné par l'eau sous pression provenant du système d'alimentation en eau installé à bord du navire.

9. Dispositif de dissuasion à jets d'eau selon la revendication 8, dans lequel le mécanisme d'entraînement comprend :
un arbre d'entraînement (180, 280) auquel la tête à buses (110, 210) est fixée, et autour de l'axe duquel la tête à buses est amenée à tourner par la rotation de l'arbre d'entraînement ;
une turbine à eau (135, 235) ;
un élément de guidage de fluide (138, 265) pour guider l'eau sous pression sur la turbine pour provoquer la rotation de la turbine autour de son axe de rotation ; et
un ensemble d'entraînement (150, 250) pour entraîner en rotation l'arbre d'entraînement par la rotation de la turbine.

10. Dispositif de dissuasion à jets d'eau selon la revendication 9, dans lequel l'axe de rotation de la turbine (135) n'est pas parallèle à l'axe de rotation de l'arbre d'entraînement (180), et dans lequel l'ensemble d'entraînement est un ensemble d'entraînement non linéaire (150) comprenant un agencement de renvoi d'angle pour rediriger les forces de rotation à partir d'autour l'axe de rotation de la turbine (135) jusqu'à autour de l'axe de rotation de l'arbre d'entraînement (180).

11. Dispositif de dissuasion à jets d'eau selon la revendication 10, comprenant :
un raccord de fluide (140) pour raccorder le dispositif de dissuasion à jets d'eau au système d'alimentation en eau ;
une chambre d'entrée (160) pour recevoir l'eau sous pression provenant du système d'alimentation en eau par le biais du raccord de fluide (140) et
pour fournir l'eau sous pression à la chambre de distribution de fluide et à l'élément de guidage de fluide du mécanisme d'entraînement ; dans lequel
l'ensemble d'entraînement (150) croise la chambre d'entrée (160).

12. Dispositif de dissuasion à jets d'eau selon la revendication 9, dans lequel l'axe de rotation de la turbine (235) est sensiblement parallèle à l'axe de rotation de l'arbre d'entraînement (280) et la turbine (235) est positionnée pour croiser l'axe de rotation de l'arbre d'entraînement (200), et dans lequel l'ensemble d'entraînement est un ensemble d'entraînement linéaire (250).

13. Dispositif de dissuasion à jets d'eau selon la revendication 12, comprenant :
un raccord de fluide (240) pour raccorder le dispositif de dissuasion à jets d'eau au système d'alimentation en eau ;
une chambre d'entrée (260) pour recevoir l'eau sous pression provenant du système d'alimentation en eau par le biais du raccord de fluide (240) et
pour fournir l'eau sous pression à la chambre de distribution de fluide (270) et à l'élément de guidage de fluide du mécanisme d'entraînement (250) ; et
un ou plusieurs canaux de transport de fluide (265) pour transporter l'eau sous pression à partir de la chambre d'entrée (260) autour de la turbine (235) et jusque dans la chambre de distribution de fluide (270).

14. Système de dissuasion à jets d'eau (300) monté sur un navire maritime, comprenant :
une pluralité de dispositifs de dissuasion à jets d'eau (310) selon l'une quelconque des revendications précédentes, chacun permettant de projeter une pluralité de jets d'eau mobiles dans un motif ayant une étendue maximale prédéfinie ;
dans lequel
les dispositifs de dissuasion à jets d'eau (310) sont montés sur le navire maritime à une position et suivant une orientation qui permettent à l'étendue maximale des motifs de jets de dispositifs à jets d'eau adjacents de se chevaucher pour former un périmètre de dissuasion sensiblement continu autour d'au moins une partie du navire maritime.

15. Procédé pour pourvoir un navire maritime d'une dissuasion à jets d'eau, comprenant l'étape de montage d'une pluralité de dispositifs à jets d'eau (310) selon l'une quelconque des revendications 1 à 13 sur le navire maritime, chacun des dispositifs à jets d'eau (310) permettant de projeter une pluralité de jets d'eau mobiles dans un motif ayant une étendue maximale prédéfinie ; dans lequel
les dispositifs de dissuasion à jets d'eau (310) sont montés sur le navire maritime à une position et suivant une orientation qui permettent à l'étendue maximale des motifs de jets de dispositifs à jets d'eau adjacents de se chevaucher pour former un périmètre de dissuasion sensiblement continu autour d'au moins une partie du navire maritime.
